# EUROPEAN PATENT SPECIFICATION

(11) **EP 1 669 401 B1**
(45) Date of publication and mention of the grant of the patent: **31.07.2013**
(21) Application number: 05111694.5
(22) Date of filing: 05.12.2005
(51) Int. Cl.: C08L 9/00, C08L 9/06, C08L 19/00, C08K 5/54

(54) **Tire with tread containing combination of specialized elastomer and coupling agent**
Reifen mit Lauffläche, der eine Kautschukmischung mit einem Silankupplungsmitel enthält
Pneumatique avec bande de roulement contenant un mélange d'un élastomère et d'un agent de couplage

(30) Priority: 10.12.2004 US 9610
(43) Date of publication of application: 14.06.2006
(73) Proprietor: The Goodyear Tire & Rubber Company, Akron, OH 44316-0001 (US)
(72) Inventor: Martter, Teresa Diane, 44320, Akron (US); Crawford, Michael Julian, 44303, Akron (US); Prentis, James William, 44303, Akron (US); Puhala, Aaron Scott, 44240, Kent (US); Ryba, Jennifer Lyn, 44281, Wadsworth (US); Balogh, George Frank, 44720, North Canton (US); Cohen, Martin Paul, 44333, Fairlawn (US); Reiter, Leonard James, 44203, Norton (US); Bates, Kenneth Allen, 44212, Brunswick (US)
(74) Representative: Kutsch, Bernd

(56) References cited:
- EP-A- 1 491 545
- EP-A- 1 640 183
- EP-A1- 0 894 825
- WO-A-99/09036

## Description

### Field of the Invention

This invention relates to a tire wherein at least a portion of its tire tread containing a running surface is of a rubber composition comprises a functionalized elastomer, silica reinforcement, particularly precipitated silica aggregates which contain hydroxyl groups (e.g. silanol groups) and a blocked alkoxyorganomercaptosilane coupling agent. The rubber composition may constitute the entire, or major portion of, the running surface of the tread or may be limited to only a longitudinal circumferential strip, or portion, of the running surface of the tread. Such functionalized elastomer is an elastomer which contains functional groups distributed along the polymer chain. Such functional groups may be divided into two categories, namely, a first category which promotes adsorptive interactions with the precipitated silica and a second category which chemically bonds to the precipitated silica. Such functionalized elastomer may contain functional group(s) from either of both of said first and second categories. In addition, said functionalized elastomer is tin coupled.

### Background of the Invention

Tire treads are sometimes composed of a rubber composition comprising conjugated diene-based elastomers which contain particulate synthetic amorphous silica reinforcement, particularly precipitated silica aggregates which contain hydroxyl groups (e.g. silanol groups) on their surface.

The hydroxyl groups (e.g. silanol groups) on the silica aggregates may be in a form of, for example, isolated and geminal hydroxyl groups. When blended with elastomers (e.g. conjugated diene-based elastomers) the silanol groups tend to promote an undesirable aggregation (agglomeration) of the silica aggregates generally thought to be caused by hydrogen bond formation between hydroxyl groups (e.g. silanol groups) of neighboring silica aggregates.

Such agglomeration of the silica aggregates may be attenuated, for example, by utilization of functionalized elastomers which contain functional groups which can interact with the hydroxyl groups (silanol, or SiOH, groups) to reduce their capacity to agglomerate.

Such functional groups, in general and depending somewhat upon the functional group and conjugated diene-based elastomer, may be positioned anywhere along the elastomer chain, in a form of, for example, a random distribution of the functional groups, small blocks of the functional group and/or said functional groups may be positioned on a terminal end of the elastomer chain. In general, for most functional groups, it is believed to be well known to those having skill in such art that elastomers which contain such a functional group on its terminal end are particularly beneficial to impart various desirable physical characteristics to the resulting silica reinforced rubber composition for use, for example, as a pneumatic tire tread.

However, use of such functionalized conjugated diene-based elastomers typically renders an increased processing difficulty in a form of significantly increased viscosity of the associated rubber composition (e.g. significantly higher Mooney ML viscosity) when used in combination with a reinforcing filler of precipitated silica aggregates which may particularly be evident when a sulfur liberating silica coupling agent is present. As a result, the rubber composition with its included ingredients typically becomes progressively more difficult to mix in an internal rubber mixer. In addition, the shaping of the resulting unvulcanized rubber composition, such as by for example extrusion and calendering, also becomes more difficult in a sense of obtaining a smooth surfaced product.

Such processing difficulty is typically amplified when the precipitated silica aggregates are blended with the functional elastomer in combination with a silica coupling agent which contains a first moiety which reacts with the hydroxyl groups (e.g. silanol groups) of the precipitated silica aggregates and a second moiety which interacts with the diene-based elastomer during one or more mixing phases, or steps, of the rubber composition, particularly in an internal rubber mixer.

For example, such first moiety may, for example, be an alkoxysilane which typically relatively quickly reacts with the hydroxyl groups of the silica aggregates. Such second moiety may, for example, be a polysulfide or mercapto group which provides liberated sulfur groups which, in turn, interact with the diene-derived portion of the elastomer(s) which may significantly increase the viscosity of the uncured rubber composition to thereby adversely affect its processability as it is being mixed and/or extruded to form a shaped unvulcanized rubber article such as, for example, tire tread strip.

It is a significant aspect of the present invention to utilize such functionalized elastomers in combination with precipitated silica aggregates together with a silica coupling agent in a manner which promotes a more processable unvulcanized rubber composition.

Historically, a prospect of using a silica coupling agent in a form of a blocked alkoxyorganomercaptosilane which has been chemically blocked to delay the interaction of such second moiety of the coupling agent with a diene-based elastomer is suggested in PCT/US98/17391 and US-B- 3,692,812. However, the prospect is not contemplated therein of preparing a precipitated silica aggregate reinforced rubber composition comprised of one or more of the aforesaid functionalized elastomers.

The blocked mercaptoalkoxysilane coupling agent for this invention is composed of an alkoxyorganomercaptosilane where the hydrogen moiety of the mercaptan moiety is substituted with a blocking moiety which allows the alkoxy groups of the mercaptoalkoxyosilane to proceed to react with the precipitated silica having hydroxyl groups (e.g. silanol groups) on its surface yet renders the mercapto portion of the mercaptoalkoxysilane relative inert, insofar as interaction with the diene-based elastomer(s) is concerned, until the blocked mercapto portion of the alkoxyorganomercaptosilane becomes unblocked.

Therefore the coupling action of the alkoxyorganomercaptosilane is interrupted by disconnecting the initial reaction of its alkoxysilane portion with the silica from the interaction of the mercapto portion with the diene-based elastomer(s) and particularly with the aforementioned specialized elastomer(s). Upon subsequent unblocking of the blocked mercapto moiety of the alkoxyorganomercaptosilane within the rubber composition during the subsequent vulcanization of the rubber composition at an elevated temperature, the silica becomes coupled via the mercapto group of the mercaptoalkoxysilane to one or more elastomers of the rubber composition.

In the description of this invention, the term "phr" relates to parts by weight for a material or ingredient per 100 parts by weight elastomer(s)". The terms "rubber" and "elastomer" may be used interchangeably unless otherwise indicated. The terms "cure" and "vulcanize" may be used interchangeably unless otherwise indicated.

EP-A- 1 491 545 describes a rubber composition for tire treads comprising a conjugated diene-rubber, precipitated silica and a blocked mercaptosilane as coupling agent.

EP-A- 1 640 183 discloses a tire tread having a rubber composition comprising a conjugated diene-rubber, a blocked mercaptosilane as coupling agent and precipitated silica. Additional conjugated diene elastomer may be present in the composition such as siloxane functionalized styrene-butadiene rubber.

WO-A-99/09036 describes a rubber composition for a tire tread comprising a coupled conjugated diene rubber, precipitated silica and a blocked mercaptosilane. The conjugated diene rubber is functionalized with a functional group derived from aminobenzophenone groups.

EP-A- 0 894 825 teaches a rubber composition for tire treads comprising a conjugated diene rubber functionalized with functional groups derived from 4,4'-bis(dismethylamino)-benzophenone, precipitated silica and mercaptopropyltrimethoxysilane as a silane coupling agent for the silica and the diene rubber component.

Finally, EP-A-0 992 537 relates to a rubber composition reinforced with silica and/or carbon black used for the preparation of tire treads and comprising a butadiene-styrene copolymer rubber having pendant amino group along its chain such as a group bearing an hexamethyleneimino function. The amino group of the rubber component may either be bonded to the terminal or to the side of the polymer chain.

### Summary and Practice of the Invention

In accordance with this invention, a tire is provided having a circumferential tread as specified an claim 1 wherein a running surface of the tread is of a rubber composition comprising, based upon parts by weight per 100 parts by weight of elastomers (phr):
(A) 10 to 100, alternatively from 50 to 80, phr of at least one functionalized elastomer comprised of a conjugated diene-based elastomer functionalized with at least one functional group,
   wherein said diene-based elastomer is selected from at least one polymer of at least one of isoprene and 1,3-butadiene and copolymers of styrene with at least one of isoprene and 1,3-butadiene,
   wherein said functional group(s) are positioned on said diene-based elastomer (e.g. along the length of the elastomer chain),
   wherein said functional groups are comprised of a first category, second category or combination thereof,
   wherein said categories of said functional groups are composed of:
   (1) a first category of functional groups selected from at least one of aliphatic amine, aryl amine, heterocyclic amine, and amide groups, and
   (2) a second category of functional groups selected from at least one of silanol, alkoxysilane, halogenated benzene, ketone, alcohol, aldehyde, ester and epoxy groups, and
(B) from zero to 90, alternately from 20 to 50, phr of at least one additional conjugated diene-based elastomer (other than and in addition to said functionalized diene-based elastomers) selected from at least one polymer of at least one of isoprene and 1,3-butadiene and copolymers of styrene with at least one of isoprene and 1,3-butadiene;
(C) from 30 to 110, alternately from 30 to 80, phr of reinforcing filler as:
   (1) 30 to 110, alternately from 30 to 80, phr of synthetic, amorphous precipitated silica aggregates, or
   (2) 10 to 105, alternately from 10 to 30, phr of synthetic, amorphous precipitated silica aggregates, and 5 to 90, alternately from 5 to 50, phr of rubber reinforcing carbon black
(D) a silica coupling agent as a blocked alkoxyorganomercaptosilane as specified in claim 1.

In further accordance with this invention, said functionalized conjugated diene-based elastomer is tin coupled, and therefore contains a tin group, which may promote an improvement in the interaction between the functionalized elastomer and rubber reinforcing carbon black fillers. Such tin coupling may, for example, be accomplished by terminating the polymerization of the monomers for the said functionalized conjugated diene-based elastomer in an organic solvent polymerization system with a tin compound such as for example tin tetrachloride (SnCl₄). For example, said functionalized elastomer is tin coupled to significantly increase its molecular weight wherein the tin coupled elastomer can then decouple at the tin functional group position during the processing of the rubber composition (e.g. high shear mixing in an internal rubber mixer), which results in a reduction of the tin coupled functionalized elastomer's molecular weight and viscosity (e.g. Mooney viscosity). Representative of additional tin compounds which may be considered for such tin coupling are, for example, RSnCl₃, (R)₂SnCl₂, (R)₃Sn CI, R₂Sn(OR)₃ and Sn(OR)₄ wherein R is an aliphatic, cycloaliphatic, or aromatic hydrocarbon group, although SnCl₄ (tin tetrachloride) is usually preferred.

For said functionalized conjugated diene-based elastomer, said functional groups may be positioned as individual groups (e.g. pendent groups) along the elastomer chain in a randomly spaced manner and/or in blocks of a plurality of said functional groups which may be generally exclusive of the terminal ends of the elastomer.

In further accordance with this invention, said circumferential tread is in a form of at least one first circumferential longitudinal tread zone of the circumferential tread of said tire, in combination with and in a parallel relationship to at least one additional circumferential longitudinal tread zone, wherein said at least one additional circumferential longitudinal tread zone is of a rubber composition comprised of at least one non-functionalized elastomer selected from polymers of isoprene and 1,3-butadiene and copolymers of styrene and at least one of isoprene and 1,3-butadiene and tin coupled polymers and copolymers of isoprene and 1,3-butadiene and tin coupled copolymers of styrene with at least one of isoprene and 1,3-butadiene, and is otherwise exclusive of said functionalized elastomers contained in said first circumferential longitudinal tread zone.

The said first category of functional groups for said functionalized conjugated diene-based elastomer is intended to include groups which provide an adsorptive interaction with the precipitated silica aggregates. In particular, said first category of functional groups are considered herein as being significant in a sense of providing a degree of basicity and/or polarity to the conjugated diene-based elastomer to, in general, promote an adsorptive interaction with the typically relatively acidic and polar nature of the said precipitated silica aggregates to, in turn promote a separation of said precipitated silica aggregates and thereby retard their agglomeration within the elastomer host.

The said second category of functional groups for said functionalized conjugated diene-based elastomer is intended to include groups which form chemical bonds to the hydroxyl groups (e.g. silanol groups) of the precipitated silica aggregates. In particular, said second category of functional groups are considered herein as being significant by providing covalent bonding to the hydroxyl groups (e.g. silanol groups) on the surface of the said precipitated silica aggregates (particles), serving to both retard their agglomeration within the elastomer host and, in addition, to promote an improvement in various physical properties of the resulting vulcanized rubber composition.

For said first category of said functional groups, an example of an amine functionalized conjugated diene-based elastomer may be, for example, an

amine functionalized styrene/conjugated diene copolymer such as, for example, a styrene/butadiene copolymer which contains from 5 to 40 weight percent bound styrene based upon the styrene/butadiene copolymer.

In practice, such amine functionalized styrene/conjugated diene copolymer may alternatively be, for example, an amine functionalized styrene/isoprene/butadiene terpolymer which contains from 10 to 30 weight percent (units derived from) styrene, 10 to 70 weight percent (units derived from) isoprene and 10 to 70 weight percent (units derived from) butadiene based upon the styrene/isoprene/butadiene terpolymer.

In practice, such amine functionalized styrene/conjugated diene copolymer elastomer and/or said additional conjugated diene-based elastomer is tin tin coupled to provide an elastomer of significantly increased molecular weight and correspondingly increased Mooney (ML 1+4) viscosity.

Such amine functionalized styrene/conjugated diene copolymer elastomer may be provided as having pendant amine groups which are distributed along the copolymer itself.

For example, the amine groups might be introduced (positioned) along the copolymer chain by first introducing an amine group onto a monomer used in the formation of the copolymer. For example, the styrene monomer might be modified with an amine group. Further, and for example, divinylbenzene might be modified with an amine group and a very small amount of the modified divinylbenzene introduced into the styrene/conjugated diene copolymerization reaction.

The following exemplary general formulas are provided as examples of various amine group substituents on the copolymer and are not intended to be limiting for this invention. In general, it is envisioned that the diene-based elastomer is attached to the amine group by one of the carbon atoms (a carbon atom included in an "R" group of the amine group). Alternatively, the elastomer (e.g. a butadiene moiety of the copolymer) can be attached directly to the nitrogen of the amine group.

For example, the functionalized conjugated diene-based elastomer may be a conjugated diene-based elastomer functionalized with at least one amine group of the general formula (II): 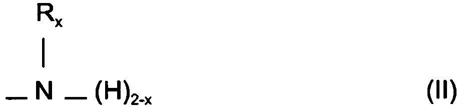 wherein x is a value of from 0 through 2, and R is selected from saturated straight chain alkyl radicals and saturated branched alkyl radicals which contain from 1 through 20 carbon atoms, alternately from 1 through 12 carbon atoms, where preferably at least one saturated alkyl radical contains from 1 through 6 carbon atoms; and from aryl radicals and substituted aryl radicals which contain from 6 to 30, alternately from 6 to 18, carbon atoms.

Such aryl amine groups (including alkaryl and aralkyl amine groups), may be, for example, of the general formulas (III-A and III-B): 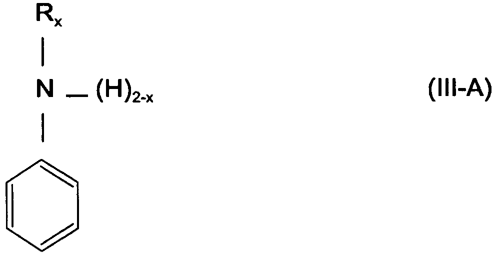 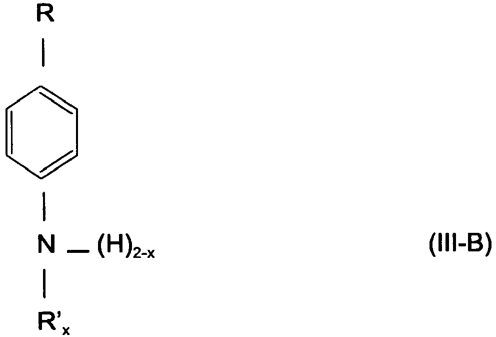 wherein x is a value of from 0 to 2, R is selected from said saturated straight chain and said saturated branched alkyl radicals having from 1 through 20 carbon atoms, alternately from 1 through 6 carbon atoms, wherein at least one R preferably contains from 1 through 6 carbon atoms. For Formula (III-B), the nitrogen atom of the amine can be positioned on either the meta or para positions of the aromatic ring relative to the position of the R radical.

For the above general formulas (II), (III-A) and (III-B), representative of said saturated straight chain alkyl radicals are, for example, methyl, ethyl, n-propyl, n-butyl, n-pentyl and n-hexyl radicals. Representative of said saturated branched alkyl radicals are, for example isobutyl, isopropyl, isopentyl and isohexyl radicals.

In practice, said amine groups for said first category of functional groups may also be heterocyclic amine groups, for example, selected from pyridine, pyrrolidine, piperidine, hexamethyleneimine and indole based groups. Such heterocyclic amine groups may be, for example, of the general formulas IV-A (pyridines), IV-B (pyrrolidines), IV-C (piperidines), IV-D (hexamethyleneimines) and IV-E (indoles) although such general formulas are not intended to be limiting: 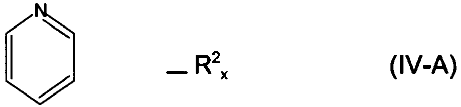 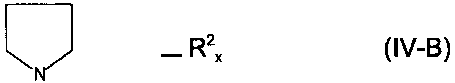 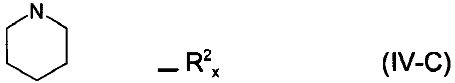 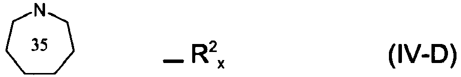 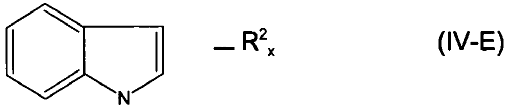 wherein, for said general formulas (IV-A), (IV-B), (IV-C), (IV-D) and (IV-E), x is a value of from zero through 2, alternately and preferably 1, and wherein R² is a saturated alkyl radical containing from 1 through 6, alternately and usually preferably from 1 through 3, carbon atoms. The R² radicals are appropriately positioned on the associated ring. For example, for formula IV-A, a single R² radical may be positioned in an ortho position to the nitrogen atom. For example, for formula IV-B, a single R² radical may be positioned in a meta position to the nitrogen atom. For example, for formula IV-C, a single R² radical may be positioned on the six member ring two carbon atoms away from the five member ring.

Representative of said saturated alkyl radicals for R² are, for example, methyl, ethyl and n-propyl radicals.

In a further aspect, the amine groups may be formed as pendent the elastomer chain by, for example, pre-reacting divinyl benzene with a suitable amine to form a modified divinyl benzene which contains the amine substituent. A small amount (e.g. one to two percent of the total styrene and 1,3-butadiene monomers) of the modified divinyl benzene is introduced into the polymerization of the monomers (e.g. styrene with at least one of 1,3-butadiene and isoprene monomers) at a desirable stage of the copolymerization process in an organic solvent solution.

Alternatively, for preparation of an amine functionalized styrene/butadiene elastomer, the styrene monomer itself may be modified with, for example, a pyrrolidone and the modified styrene is copolymerized with at least one of 1,3-butadiene and isoprene monomer(s) in an organic solvent solution. It is envisioned that pendant amine groups are thereby provided on the resulting styrene/conjugated diene copolymer elastomer.

Alternatively, a vinyl pyrrolidone may be introduced during the copolymerization of the styrene with at least one of 1,3-butadiene and isoprene monomers to effect pendant amine groups from the resultant styrene/butadiene copolymer elastomer.

For said second category of functional groups for said functional diene-based elastomer which are capable of forming covalent bonds to precipitated silica, examples include silanol, alkoxysilane, hydrogenated benzene, ketone, alcohol, aldehyde, ester and epoxy groups.

For example, second category functional group may be an alcohol group derived from 4,4'-bis(dimethylamino)-benzophenone, 4,4' bis(ethylamino)-benzophenone, 4,4'bis(dibutylamine)-benzophenone, 4,4'diaminobenzophenone or 4-dimethylaminobenzophenone

Said functionalized diene-based elastomer may also include multiple categories and/or types of said first category and said second category functional groups in the same elastomer. Representative examples include polymers containing both epoxy and amine functional groups (for example see US-A- 2003/0199669), containing both amine and alkoxysilane functional groups (for example see WO-A- 2003/029299) and containing both alcohol groups derived from diethylamino benzophone and tin functional groups (for example see patent publication US-B 4,550,142).

In further accordance with the invention, a tire is provided with a rubber tread wherein the running surface of said tread is configured with a plurality of longitudinal, circumferential rubber zones wherein the running surface of at least one of said tread zones is a circumferential longitudinal specialized tread strip wherein said specialized tread strip is comprised of the silica reinforced tread rubber composition of this invention which contains a combination of at least one of said functionalized conjugated diene-based elastomers and said blocked alkoxyorganomercaptosilane coupling agent for said silica. The tire is provided wherein the said tread running surface is a circumferential longitudinal tread zone (e.g. tread strip) in combination with at least one additional circumferential longitudinal tread zone (e.g. tread strip), wherein:
(A) said additional circumferential longitudinal tread zone is a rubber composition comprised of a non-functionalized rubber selected from at least one of polymers of at least one of isoprene and 1,3-butadiene and copolymers of styrene and at least one of isoprene and 1,3-butadiene at least, or
(B) said additional circumferential longitudinal tread zone is a rubber composition comprised of at least one of said functionalized elastomers of this invention.

Therefore said running surface of said tire is comprised of a plurality of parallelly aligned longitudinal, circumferential rubber tread zones wherein at least one of said tread rubber zones is comprised of the functionalized conjugated diene-based elastomer composition of this invention and at least one of said tread rubber zones is exclusive of (does not contain) said functionalized conjugated diene-based elastomer composition of this invention.

Said tread zone of functionalized conjugated diene-based elastomer rubber composition of this invention may be positioned on the centerline of the tread running surface of may be spaced apart from the centerline of the tread running surface.

It is considered herein that such tire with a running surface comprised of said plurality of circumferential tread zones is significant in that such combination of varied rubber compositions presented in plurality of tread zones enables a simultaneous optimization across the tread running surface of desirable tire tread properties including, for example, acceptable road traction in wet, dry and snow conditions, acceptable resistance to tread wear and promotion of acceptable reduced tire rolling resistance, depending somewhat upon the desired tire tread properties and vehicular demands.

It is to be appreciated that the tire of this invention may be prepared by a process which comprises the steps of:
(A) mixing a mixture comprised of at least one of said functionalized elastomers, optionally including at least one of said additional diene-based elastomers, and said reinforcing filler in at least one sequential mixing step in an internal rubber mixer to a temperature in a range of from about 140°C to about 175°C in the absence of free addition of sulfur and organic sulfur vulcanization accelerator;
(B) thereafter, (which may be included in the above or subsequent mixing step), mixing therewith said blocked alkoxyorganomercaptosilane, which contains said blocking agent for the mercapto group thereof, to a temperature in a range of from 140°C to 175°C;
(C) thereafter, in a subsequent mixing step, mixing therewith free sulfur, at least one organic sulfur vulcanization accelerator and at least one unblocking agent to a temperature in a range of from 95°C to 120°C;
   wherein said rubber mixtures are allowed to cool to a temperature below 40°C between said mixing steps;
(D) shaping the resulting mixture of step (C) to form a shaped unvulcanized rubber tire tread strip and building a tire which contains said unvulcanized tread strip to form a tire assembly thereof followed by sulfur vulcanizing said tire assembly in a in a suitable mold at an elevated temperature in a range of from 125°C to 180°C to form the tire of this invention;
   wherein the chemical activity of the mercapto group of said blocked alkoxyorganomercaptosilane is substantially blocked from interacting with said diene-based elastomer until said unblocking agent is mixed therewith and allowed to subsequently unblock said blocked mercapto group of said blocked alkoxyorganomercaptosilane substantially at said elevated vulcanization temperature and thereby enable the unblocked mercapto group to interact with said diene-based elastomer) substantially subsequent to said mixing thereof.

As hereinbefore discussed if an unblocking agent should be desired, exemplary thereof is, for example, N,N'-diphenylguanidine and N,N'-di-orthotolylguanidine.

It is to be appreciated that the said unblocking agent is a material capable of unblocking the blocked alkoxyorganomercaptosilane to enable the mercapto group, or moiety, of the alkoxyorganomercaptosilane to interact with the diene based elastomer(s). It is to be appreciated that choice of the unblocking agent will depend upon the blocking group, or moiety, used to block the chemical activity of the alkoxyorganomercaptosilane itself insofar as interacting with a diene-based elastomer is concerned, which would be readily understood by one having skill in such art.

For a further discussion relating to said blocked alkoxyorganomercaptosilane coupling agent, representative of usually preferred blocked alkoxyorganomercaptosilanes are those where R₁ has a primary carbon attached to the carbonyl as an alkyl group which contains from 2 to 12, preferably from 6 through 8, carbon atoms; and where G is a divalent hydrocarbon radical.

Representative examples of G are, for example, -(CH₂)ₙ- radicals where n is a value of from 1 to 12, diethylene cyclohexane, 1,2,4-triethylene cyclohexane, and diethylene benzene radicals. In practice, it is preferred that the sum of the carbon atoms within the G and Y groups is from 4 to 24, more preferably from 6 to 18. It is considered herein that such amount of carbon atoms in the blocked mercaptoalkoxysilane may aid in facilitating the dispersion of the composite of pre-reacted silica into the diene-based elastomer(s), whereby it is envisioned that a balance of physical of properties in the cured reinforced elastomer(s) is improved.

In practice, the R group of the blocked alkoxyorganomercaptosilane is preferably selected from hydrogen atom and saturated alkyl groups having from 1 through 18 carbon atoms wherein, alternately said R groups are methyl groups or wherein, alternately one or two of said R groups is a methyl group and the remainder of said R groups are saturated alkyl groups having from 3 through 18 carbon atoms.

Representative examples of X are, for example, methoxy, ethoxy, isobutoxy, propoxy, isopropoxy, acetoxy and oximato groups. Preferably, X is selected from methoxy, acetoxy and ethoxy groups. In practice, at least one X must be reactive (i.e., hydrolyzable).

In practice, for a usually preferred blocked mercaptoalkoxysilanes, Y is phenyl, cyclohexyl, or straight chain or substituted straight chain alkyl radical having from 3 to 18 carbon atoms. For a more preferred blocked alkoxyorganomercaptosilane, Y is a straight chain or substituted strait chain alkyl radical having from 6 to 18 carbon atoms.

An exemplary amount of the unblocking agent may be, for example, 0.1 to 5 phr; alternately in a range of from 0.5 to 3 phr, depending somewhat upon the nature of the blocked alkoxyorganomercaptosilane, the unblocking agent and the mercapto coupling activity desired with the respective specialized elastomer.

An unblocking agent, if used, is typically mixed with the rubber mixture subsequent to the preparation of the composite of amorphous precipitated silica and may be added together with the sulfur curative in the final curative addition mixing stage.

As hereinbefore mentioned, examples of unblocking agents include, for example, the hereinbefore referenced N, N'-diphenylguanidine, N, N'-di-orthotolylguanidine as well as, for example, hexamethylenetetramine and 4,4'-diaminodiphenylmethane.

Thus, when it is desired to unblock the blocked mercaptoalkoxysilane to enable the mercapto group (moiety) to interact with the specialized elastomer(s) to thereby couple the amorphous precipitated silica to the elastomer(s) it is seen that various unblocking agents may optionally be used, depending somewhat upon the blocking moiety, or agent, used to block the chemical activity of the mercapto group of the blocked mercaptoalkoxysilane.

Representative examples of various alkoxyorganomercaptosilanes prior to the blocking thereof are, for example, triethoxy mercaptopropyl silane, trimethoxy mercaptopropyl silane, methyl dimethoxy mercaptopropyl silane, methyl diethoxy mercaptopropyl silane, dimethyl methoxy mercaptopropyl silane, triethoxy mercaptoethyl silane, and tripropoxy mercaptopropyl silane.

Representative examples of various blocked alkoxyorganomercaptosilanes may be, for example, 2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-1-ethyl thioacetate; 2-(dimethylethoxysilyl)-1-ethyl thioacetate; 2-(dimethylmethoxysilyl)-1-ethyl thioacetate; 2-(dimethylisopropoxysilyl)-1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl-2-butyl thioacetate; 1-triethoxysilyl-3-methyl-3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1-propyl thioacetate; 3-triacetoxysilyl-1-propyl thioacetate; 2-methyldiacetoxysilyl-1-ethyl thioacetate; 2-triacetoxysilyl-1-ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propylthiooctoate and 3-ethoxyditetradecyloxy-1-propyl-thiooctoate.

Various methods of preparation of various blocked alkoxyorganomercaptosilanes may be found, for example, in the aforesaid PCT/US98/17391 and US-B 3,692,812 as well as in various literature publications such as, for example, in Gornowicz, G., "Preparation of Silylalkanethiols", J. Org. Chem., Volume 33, No. 7, July, 1968; Vorkonov, M. G., et al., Trialkoxysilylalkanethiols and Bis(trialkoxsilylakyl)sulfides, Izvestiya Akademii Nauk SSSR and Seriya Khimicheskeya, No. 8, Pages 1849 through 1851, August 1977.

Various commercially available synthetic amorphous silica rubber reinforcement fillers, particularly precipitated silicas, may be used in the practice of this invention. Such silicas, typically in a form of aggregates thereof, are sometimes referred to in a sense of their BET (nitrogen surface area) and CTAB or DBP values as is well known to those having skill in such art. Representative of such silicas, for example, only and without limitation, are silicas available from PPG Industries under the Hi-Sil trademark with designations 210, 243, etc; silicas available from Rhodia, with designations of Zeosil 1165MP and Zeosil 165GR, silicas available from Degussa AG with designations, for example, VN2 and VN3, and silicas available from Huber such as, for example, Zeopol 8745 and Zeopol 8715.

It is readily understood by those having skill in the art that the rubber composition of the tread rubber would be compounded by methods generally known in the rubber compounding art, such as mixing the various sulfurvulcanizable constituent rubbers with various commonly used additive materials such as, for example, curing aids, such as sulfur, activators, retarders and accelerators, processing additives, such as oils, resins including tackifying resins and plasticizers, fillers, pigments, fatty acid, zinc oxide, waxes, antioxidants and antiozonants, peptizing agents and reinforcing materials as the hereinbefore referred to synthetic silica aggregates and rubber reinforcing carbon black.

## Claims

1. A tire having a circumferential tread of a rubber composition comprising, based upon parts by weight per 100 parts by weight of elastomers (phr):
(A) from 10 to 100 phr of at least one functionalized elastomer comprising a conjugated diene-based elastomer functionalized with at least one functional group distributed along its elastomer chain,
wherein said diene-based elastomer is selected from at least one polymer of at least one of isoprene and 1,3-butadiene and copolymers of styrene and least one of isoprene and 1,3-butadiene, and
wherein said functional groups comprise a first category, a second category or a combination of said first and second categories, wherein said first and second categories are composed of:
(1) a category of functional groups selected from at least one of aliphatic amine, aryl amine, heterocyclic amine and amide groups, and benzophenone groups, and
(2) a category of functional groups selected from at least one of silanol, alkoxysilane, halogenated benzene, ketone, alcohol, aldehyde, ester and epoxy groups;
(B) from zero to 90 phr of at least one additional conjugated diene-based elastomer selected from polymers at least one of isoprene and 1,3-butadiene and copolymers of styrene with at least one of isoprene and 1,3-butadiene;
(C) from 30 to 110 phr of a reinforcing filler as:
(1) from 30 to 110 phr of synthetic, amorphous precipitated silica aggregates, or
(2) from 10 to 105 phr of synthetic, amorphous precipitated silica aggregates, and 5 to 100 phr of rubber reinforcing carbon black; and
(D) a silica coupling agent as a blocked alkoxyorganomercaptosilane wherein
(1) wherein said blocked alkoxyorganomercaptosilane is of the general formula (I):
(X₃Si)ₙ-G-S-C(=0)-Y (I)
wherein Y is independently selected from hydrogen, and straight, cyclic or branched alkyl radicals containing from 1 to 18 carbon atoms and which may or may not contain unsaturation, alkenyl groups, aryl groups, aralkyl groups;
wherein G is independently selected from divalent groups derived from substitution of alkyl, alkenyl, aryl or aralkyl group(s) wherein G can contain from 1 to 18 carbon atoms, provided however that G is not such that said mercaptoalkoxysilane contains an alpha-, or beta- unsaturated carbonyl including a carbon-to-carbon double bond next to the thiocarbonyl group;
wherein X is independently selected from the group consisting of -Cl, -GR, RO- , RC(=O)- , R₂C=NO-, R₂NO-, or R₂N-, -R, -(OSiR₂), (OSiR₃),wherein R is selected from hydrogen, from saturated straight chain, cyclic and branched alkyl radicals containing from 1 to 18 carbon atoms, from unsaturated straight chain, cyclic and branched alkyl radicals containing from 2 to 18 carbon atoms, and from alkenyl groups, aryl groups and aralkyl groups; and wherein G is as above and wherein at least one X is not an -R radical; or
(2) wherein said blocked alkoxyorganomercaptosilane is selected from 2-triethoxysilyl-1-ethyl thioacetate; 2-trimethoxysilyl-1-ethyl thioacetate; 2-(methyldimethoxysilyl)-1-ethyl thioacetate; 3-trimethoxysilyl-1-propyl thioacetate; triethoxysilylmethyl thioacetate; trimethoxysilylmethyl thioacetate; triisopropoxysilylmethyl thioacetate; methyldiethoxysilylmethyl thioacetate; methyldimethoxysilylmethyl thioacetate; methyldiisopropoxysilylmethyl thioacetate; dimethylethoxysilylmethyl thioacetate; dimethylmethoxysilylmethyl thioacetate; dimethylisopropoxysilylmethyl thioacetate; 2-triisopropoxysilyl-1-ethyl thioacetate; 2-(methyldiethoxysilyl)-1-ethyl thioacetate; 2-(methyldiisopropoxysilyl)-1-ethyl thioacetate; 2-(dimethylethoxysilyl)-1-ethyl thioacetate; 2-(dimethylmethoxysilyl)-1-ethyl thioacetate; 2-(dimethylisopropoxysilyl)-1-ethyl thioacetate; 3-triethoxysilyl-1-propyl thioacetate; 3-triisopropoxysilyl-1-propyl thioacetate; 3-methyldiethoxysilyl-1-propyl thioacetate; 3-methyldimethoxysilyl-1-propyl thioacetate; 3-methyldiisopropoxysilyl-1-propyl thioacetate; 1-(2-triethoxysilyl-1-ethyl)-4-thioacetylcyclohexane; 1-(2-triethoxysilyl-1-ethyl)-3-thioacetylcyclohexane; 2-triethoxysilyl-5-thioacetylnorbornene; 2-triethoxysilyl-4-thioacetylnorbornene; 2-(2-triethoxysilyl-1-ethyl)-5-thioacetylnorbornene; 2-(2-triethoxysilyl-1-ethyl)-4-thioacetylnorbornene; 1-(1-oxo-2-thia-5-triethoxysilylpenyl)benzoic acid; 6-triethoxysilyl-1-hexyl thioacetate; 1-triethoxysilyl-5-hexyl thioacetate; 8-triethoxysilyl-1-octyl thioacetate; 1-triethoxysilyl-7-octyl thioacetate; 6-triethoxysilyl-1-hexyl thioacetate; 1-triethoxysilyl-5-octyl thioacetate; 8-trimethoxysilyl-1-octyl thioacetate; 1-trimethoxysilyl-7-octyl thioacetate; 10-triethoxysilyl-1-decyl thioacetate; 1-triethoxysilyl-9-decyl thioacetate; 1-triethoxysilyl-2-butyl thioacetate; 1-triethoxysilyl-3-butyl thioacetate; 1-triethoxysilyl-3-methyl- 2-butyl thioacetate; 1-triethoxysilyl-3-methyl-3-butyl thioacetate; 3-trimethoxysilyl-1-propyl thiooctoate; 3-triethoxysilyl-1-propyl thiopalmitate; 3-triethoxysilyl-1-propyl thiooctoate; 3-triethoxysilyl-1-propyl thiobenzoate; 3-triethoxysilyl-1-propyl thio-2-ethylhexanoate; 3-methyldiacetoxysilyl-1-propyl thioacetate; 3-triacetoxysilyl-1-propyl thioacetate; 2-methyldiacetoxysilyl-1-ethyl thioacetate; 2-triacetoxysilyl-1- ethyl thioacetate; 1-methyldiacetoxysilyl-1-ethyl thioacetate; 1-triacetoxysilyl-1-ethyl thioacetate; 3-ethoxydidodecyloxy-1-propyl thioacetate; 3-ethoxyditetradecyloxy-1-propyl thioacetate; 3-ethoxydidodecyloxy-1-propylthiooctoate and 3-ethoxyditetradecyloxy-1-propyl-thiooctoate; and
wherein (i) said functionalized diene-based elastomer is tin coupled; and/or
(ii) said circumferential tread is in a form of at least one first circumferential longitudinal tread zone of the circumferential tread of said tire, in combination with and in a parallel relationship to at least one additional circumferential longitudinal tread zone, wherein said at least one additional circumferential longitudinal tread zone is of a rubber composition comprised of at least one non-functionalized elastomer selected from polymers of isoprene and 1,3-butadiene and copolymers of styrene and at least one of isoprene and 1,3-butadiene and tin coupled polymers and copolymers of isoprene and 1,3-butadiene and tin coupled copolymers of styrene with at least one of isoprene and 1,3-butadiene, and is otherwise exclusive of said functionalized elastomers contained in said first circumferential longitudinal tread zone.

2. The tire of claim 1 wherein, for said functionalized conjugated diene-based elastomer, said functional groups are randomly positioned as individual groups along the elastomer chain.

3. The tire of any of the preceding claims wherein said functionalized diene-based elastomer is functionalized with at least one amine group of the general formula (II): 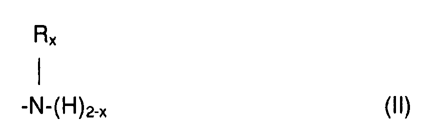 wherein x is a value of from 0 through 2; and R is selected from saturated straight chain alkyl radicals and saturated branched alkyl radicals which contain from 1 through 20 carbon atoms and from aryl radicals and substituted aryl radicals which contain from 6 to 30 carbon atoms.

4. The tire of any of the preceding claims 1 or 2, wherein said functionalized diene-based elastomer is functionalized with at least one heterocyclic amine group selected from pyridine, pyrrolidine, piperidine, hexamethyleneimine and indole based groups; with at least one substituted benzene group selected from chlorobenzene, bromobenzene, benzyl alcohol and nitrobenzene groups, or with at least one organosilane functional group selected from alkylsilane, alkylhalosilane, alkoxysilane, alkoxyhalosilane, silanol and alkylaminosilane containing groups.

5. The tire of any of the preceding claims 1 or 2, wherein said functionalized diene-based elastomer is functionalized with at least one silanol containing group, at least one alkoxysilane containing group, at least one epoxy containing group, preferably a glycidoxy containing group or a diglycidylamino containing group, or a ketone, alcohol, aldehyde or ester containing group.

6. The tire of claim 1, wherein second category functional group is an alcohol group derived from 4,4'-bis(dimethylamino)-benzophenone, 4,4'-bis(ethylamino)-benzophenone, 4,4'-bis(dibutylamine)-benzophenone, 4,4'-diaminobenzophenone or 4-dimethylaminobenzophenone.

7. A process of preparing a tire according to at least one of the previous claims, the process comprising:
(A) mixing, in at least one sequential preparatory mixing step in an internal rubber mixer, ingredients comprising at least one of said functionalized elastomers, optionally including at least one of said additional diene-based elastomers, and said reinforcing filler to a temperature in a range of from 140ºC to 175ºC in the absence of addition of free sulfur;
(B) thereafter mixing therewith, in the same of subsequent mixing step in an internal rubber, said blocked alkoxyorganomercaptosilane, in the absence of addition of free sulfur, to a temperature in a range of from 140°C to 175°C;
(C) thereafter mixing therewith, in a subsequent mixing step, ingredients comprising curatives comprising free sulfur and at least one organic sulfur vulcanization accelerator to a temperature in a range of from 95°C to 120°C;
(D) shaping the resulting mixture of step (C) to form a shaped unvulcanized rubber tire tread strip and building a tire which contains said unvulcanized tread strip to form a tire assembly thereof followed by sulfur vulcanizing said tire assembly in a in a suitable mold at an elevated temperature in a range of from 140ºC to 180ºC to form the tire.

## Patentansprüche

1. Reifen mit einer umfangsgerichteten Lauffläche aus einer Kautschukzusammensetzung, umfassend, auf Basis von Gewichtsteilen je 100 Gewichtsteile Elastomere (ThK):
(A) 10 bis 100 ThK mindestens eines funktionalisierten Elastomers, umfassend ein Elastomer auf Basis konjugierten Diens, das mit mindestens einer Funktionsgruppe funktionalisiert ist, die entlang seiner Elastomerkette verteilt ist,
wobei das Elastomer auf Dienbasis aus mindestens einem Polymer von mindestens einem von Isopren und 1,3-Butadien und Copolymeren von Styrol und mindestens einem von Isopren und 1,3-Butadien ausgewählt ist, und
wobei die Funktionsgruppen eine erste Kategorie, eine zweite Kategorie oder eine Kombination dieser ersten und zweiten Kategorie umfassen, wobei die erste und zweite Kategorie zusammengesetzt sind aus:
(1) einer Kategorie von Funktionsgruppen, ausgewählt aus mindestens einem von aliphatischen Amin-, Arylamin-, heterozyklischen Amin- und Amidgruppen, und Benzophenongruppen, und
(2) einer Kategorie von Funktionsgruppen, ausgewählt aus mindestens einem von Silanol-, Alkoxysilan-, halogenierten Benzol-, Keton-, Alkohol-, Aldehyd-, Ester- und Epoxygruppen;
(B) Null bis 90 ThK mindestens eines zusätzlichen Elastomers auf Basis konjugierten Diens, ausgewählt aus Polymeren von mindestens einem von Isopren und 1,3-Butadien und Copolymeren von Styrol mit mindestens einem von Isopren und 1,3-Butadien;
(C) 30 bis 110 ThK eines Verstärkungsfüllstoffs als:
(1) 30 bis 110 ThK synthetische, amorphe ausgefällte Silikaaggregate, oder
(2) 10 bis 105 ThK synthetische, amorphe ausgefällte Silikaaggregate, und 5 bis 100 ThK Kautschukverstärkungs-Carbon Black; und
(D) einen Silika-Haftvermittler als ein blockiertes Alkoxyorganomercaptosilan, wobei
(1) wobei besagtes blockiertes Alkoxyorganomercaptosilan die allgemeine Formel (I) aufweist:
(X₃Si)ₙ-G-S-C(=O)-Y (I)
wobei Y unabhängig aus Wasserstoff und geraden, zyklischen oder verzweigten Alkylradikalen ausgewählt ist, die 1 bis 18 Kohlenstoffatome enthalten und die entweder Ungesättigtheit enthalten können oder nicht, Alkenylgruppen, Arylgruppen, Aralkylgruppen;
wobei G unabhängig aus zweiwertigen Gruppen ausgewählt ist, die aus Substitution von Alkyl-, Alkenyl-, Aryl- oder Aralkylgruppe(n) gewonnen sind, wobei G 1 bis 18 Kohlenstoffatome enthalten kann, jedoch vorausgesetzt, dass G nicht derart ist, dass das Mercaptoalkoxysilan ein alpha- oder beta-ungesättigtes Carbonyl einschließlich einer Kohlenstoff-Kohlenstoff-Doppelbindung dicht bei der Thiocarbonylgruppe enthält;
wobei X unabhängig aus der Gruppe ausgewählt ist, bestehend aus -CI, -GR, RO-, RC(=O)-, R₂C=NO-, R₂NO-, oder R₂N-, -R, -(OSiR₂), (OSiR₃), wobei R aus Wasserstoff, aus gesättigten geradkettigen, zyklischen und verzweigten Alkylradikalen, die 1 bis 18 Kohlenstoffatome enthalten, aus ungesättigten geradkettigen, zyklischen und verzweigten Alkylradikalen, die 2 bis 18 Kohlenstoffatome enthalten, und aus Alkenylgruppen, Arylgruppen und Aralkylgruppen ausgewählt ist; und wobei G wie oben ist und wobei mindestens ein X kein -R-Radikal ist; oder
(2) wobei besagtes blockiertes Alkoxyorganomercaptosilan ausgewählt ist aus 2-Triethoxysilyl-1-ethylthioacetat; 2-Trimethoxysilyl-1-ethylthioacetat; 2-(Methyldimethoxysilyl)-1-ethylthioacetat; 3-Trimethoxysilyl-1-propylthioacetat; Triethoxysilylmethylthioacetat; Trimethoxysilylmethylthioacetat; Triisopropoxysilylmethylthioacetat; Methyldiethoxysilylmethylthioacetat; Methyldimethoxysilylmethylthioacetat; Methyldiisopropoxysilylmethylthioacetat; Dimethylethoxysilylmethylthioacetat; Dimethylmethoxysilylmethylthioacetat; Dimethylisopropoxysilylmethylthioacetat; 2-Triisopropoxysilyl-1-ethylthioacetat; 2-(Methyldiethoxysilyl)-1-ethylthioacetat; 2-(Methyldiisopropoxysilyl)-1-ethylthioacetat; 2-(Dimethylethoxysilyl)-1-ethylthioacetat; 2-(Dimethylmethoxysilyl)-1-ethylthioacetat; 2-(Dimethylisopropoxysilyl)-1-ethylthioacetat; 3-Triethoxysilyl-1-propylthioacetat; 3-Triisopropoxysilyl-1-propylthioacetat; 3-Methyldiethoxysilyl-1-propylthioacetat; 3-Methyldimethoxysilyl-1-propylthioacetat; 3-Methyldiisopropoxysilyl-1-propylthioacetat; 1-(2-Triethoxysilyl-1-ethyl)-4-thioacetylcyclohexan; 1-(2-Triethoxysilyl-1-ethyl)-3-thioacetylcyclohexan; 2-Triethoxysilyl-5-thioacetylnorbornen; 2-Triethoxysilyl-4-thioacetylnorbornen; 2-(2-Triethoxysilyl-1-ethyl)-5-thioacetylnorbornen; 2-(2-Triethoxysilyl-1-ethyl)-4-thioacetylnorbornen; 1-(1-Oxo-2-thia-5-triethoxysilylpenyl)benzoesäure; 6-Triethoxysilyl-1-hexylthioacetat; 1-Triethoxysilyl-5-hexylthioacetat; 8-Triethoxysilyl-1-octylthioacetat; 1-Triethoxysilyl-7-octylthioacetat; 6-Triethoxysilyl-1-hexylthioacetat; 1-Triethoxysilyl-5-octylthioacetat; 8-Trimethoxysilyl-1-octylthioacetat; 1-Trimethoxysilyl-7-octylthioacetat; 10-Triethoxysilyl-1-decylthioacetat; 1-Triethoxysilyl-9-decylthioacetat; 1-Triethoxysilyl-2-butylthioacetat; 1-Triethoxysilyl-3-butylthioacetat; 1-Triethoxysilyl-3-methyl-2-butylthioacetat; 1-Triethoxysilyl-3-methyl-3-butylthioacetat; 3-Trimethoxysilyl-1-propylthiooctat; 3-Triethoxysilyl-1-propylthiopalmitat; 3-Triethoxysilyl-1-propylthiooctat; 3-Triethoxysilyl-1-propylthiobenzoat; 3-Triethoxysilyl-1-propylthio-2-ethylhexanoat; 3-Methyldiacetoxysilyl-1-propylthioacetat; 3-Triacetoxysilyl-1-propylthioacetat; 2-Methyldiacetoxysilyl-1-ethylthioacetat; 2-Triacetoxysilyl-1-ethylthioacetat; 1-Methyldiacetoxysilyl-1-ethylthioacetat; 1 -Triacetoxysilyl-1-ethylthioacetat; 3-Ethoxydidodecyloxy-1-propylthioacetat; 3-Ethoxyditetradecyloxy-1-propylthioacetat; 3-Ethoxydidodecyloxy-1-propylthiooctat und 3-Ethoxyditetradecyloxy-1-propylthiooctat; und wobei
(i) besagtes funktionalisiertes Elastomer auf Dienbasis zinngekoppelt ist; und/oder
(ii) besagte umfangsgerichtete Lauffläche in Form mindestens einer ersten umfangsgerichteten längsverlaufenden Laufflächenzone der umfangsgerichteten Lauffläche besagten Reifens vorliegt, in Kombination mit und in einem parallelen Verhältnis zu mindestens einer zusätzlichen umfangsgerichteten längsverlaufenden Laufflächenzone, wobei besagte mindestens eine zusätzliche umfangsgerichtete längsverlaufende Laufflächenzone aus einer Kautschukzusammensetzung besteht, bestehend aus mindestens einem nicht-funktionalisierten Elastomer, ausgewählt aus Polymeren von Isopren und 1,3-Butadien und Copolymeren von Styrol und mindestens einem von Isopren und 1,3-Butadien und zinngekoppelten Polymeren und Copolymeren von Isopren und 1,3-Butadien und zinngekoppelten Copolymeren von Styrol mit mindestens einem von Isopren und 1,3-Butadien, und ansonsten unter Ausschluss besagter funktionalisierter Elastomere ist, die in der ersten umfangsgerichteten längsverlaufenden Laufflächenzone enthalten sind.

2. Reifen nach Anspruch 1, wobei, für das funktionalisierte Elastomer auf Basis konjugierten Diens, die Funktionsgruppen willkürlich als individuelle Gruppen entlang der Elastomerkette positioniert sind.

3. Reifen nach einem der vorgenannten Ansprüche, wobei das funktionalisierte Elastomer auf Dienbasis funktionalisiert ist mit mindestens einer Amingruppe mit der allgemeinen Formel (II): 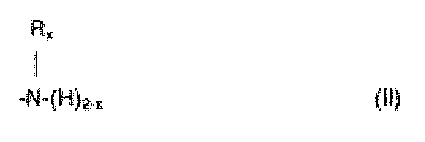 wobei x ein Wert von 0 bis einschließlich 2 ist; und R aus gesättigten geradkettigen Alkylradikalen und gesättigten verzweigten Alkylradialen, die 1 bis einschließlich 20 Kohlenstoffatome enthalten, und aus Arylradikalen und substituierten Arylradikalen, die 6 bis 30 Kohlenstoffatome enthalten, ausgewählt ist.

4. Reifen nach einem der vorgenannten Ansprüche 1 oder 2, wobei das funktionalisierte Elastomer auf Dienbasis mit mindestens einer heterozyklischen Amingruppe, ausgewählt aus Pyridin-, Pyrrolidin-, Piperidin-, Hexamethylenimin-und Indol-basierten Gruppen; mit mindestens einer substituierten Benzolgruppe, ausgewählt aus Chlorbenzol-, Brombenzol-, Benzylalkohol- und Nitrobenzolgruppen, oder mit mindestens einer Organosilanfunktionsgruppe, ausgewählt aus Alkylsilan, Alkylhalosilan, Alkoxysilan, Alkoxyhalosilan, Silanol und Alkylaminosilan enthaltenden Gruppen, funktionalisiert ist.

5. Reifen nach einem der vorgenannten Ansprüche 1 oder 2, wobei das funktionalisierte Elastomer auf Dienbasis mit mindestens einer Silanol enthaltenden Gruppe, mindestens einer Alkoxysilan enthaltenden Gruppe, mindestens einer Epoxy enthaltenden Gruppe, bevorzugt einer Glycidoxy enthaltenden Gruppe oder einer Diglydiclamino enthaltenden Gruppe, oder einer Keton, Alkohol, Aldehyd oder Ester enthaltenden Gruppe funktionalisiert ist.

6. Reifen nach Anspruch 1, wobei die Funktionsgruppe der zweiten Kategorie eine Alkoholgruppe ist, abgeleitet von 4,4'-Bis(dimethylamino)-benzophenon; 4,4'-Bis(ethylamino)-benzophenon; 4,4'-Bis(dibutylamin)-benzophenon; 4,4'-Diaminobenzophenon oder 4-Dimethylaminobenzophenon.

7. Verfahren zur Herstellung eines Reifens nach mindestens einem der vorgenannten Ansprüche, wobei das Verfahren umfasst:
(A) Mischen, in mindestens einem sequentiellen vorbereitenden Mischschritt in einem Innengummimischer, Inhaltsstoffe umfassend mindestens eines der besagten funktionalisierten Elastomere, optionsweise einschließlich mindestens eines der zusätzlichen Elastomere auf Dienbasis, und besagten Verstärkungsfüllstoff bis auf eine Temperatur in einem Bereich von 140°C bis 175°C in Abwesenheit des Zusatzes von freiem Schwefel;
(B) danach damit Mischen, in demselben oder nachfolgenden Mischschritt in einem Innengummimischer, besagtes blockiertes Alkoxyorganomercaptosilan, in Abwesenheit des Zusatzes von freiem Schwefel, bis auf eine Temperatur in einem Bereich von 140°C bis 175°C;
(C) danach damit Mischen, in einem nachfolgenden Mischschritt, Inhaltsstoffe umfassend Vulkanisationsmittel, die freien Schwefel und mindestens einen organischen Schwefelvulkanisationsbeschleuniger umfassen, bis auf eine Temperatur in einem Bereich von 95°C bis 120°C;
(D) Formen des resultierenden Gemischs von Schritt (C), um einen geformten unvulkanisierten Kautschukreifenlaufflächenstreifen zu bilden, und Bauen eines Reifens, der den unvulkanisierten Laufflächenstreifen enthält, um eine Reifenbaugruppe daraus zu bilden, gefolgt vom Schwefelvulkanisieren der Reifenbaugruppe in einem geeigneten Formwerkzeug auf einer erhöhten Temperatur in einem Bereich von 140°C bis 180°C, um den Reifen zu formen.

## Revendications

1. Bandage pneumatique possédant une bande de roulement circonférentielle d'une composition de caoutchouc comprenant, basées sur des parties en poids par 100 parties en poids élastomère (phr) :
(A) de 10 à 100 phr d'au moins un élastomère fonctionnalisé comprenant un élastomère à base de diène conjugué fonctionnalisé avec au moins un groupe fonctionnel distribué le long de sa chaîne élastomère ;
ledit élastomère à base diénique étant choisi parmi au moins un polymère d'au moins un membre choisi parmi l'isoprène et le 1,3-butadiène et des copolymères de styrène et d'au moins un membre choisi parmi l'isoprène et le 1,3-butadiène ;
lesdits groupes fonctionnels comprenant une première catégorie, une deuxième catégorie ou une combinaison de ladite première et de ladite deuxième catégorie, ladite première et ladite deuxième catégorie se composant de :
(1) une catégorie de groupe fonctionnel choisi parmi au moins un membre comprenant un groupe d'amine aliphatique, un groupe d'arylamine, un groupe d'amine hétérocyclique et un groupe d'amide ; et
(2) une catégorie de groupe fonctionnel choisi parmi au moins un membre comprenant un groupe silanol, un groupe alcoxysilane, un groupe de benzène halogéné, un groupe cétone, un groupe alcool, un groupe aldéhydique, un groupe d'ester et un groupe époxy ;
(B) de 0 à 90 phr d'au moins un élastomère supplémentaire à base de diène conjugué choisi parmi des polymères d'au moins un membre choisi parmi l'isoprène et le 1,3-butadiène et des copolymères de styrène et d'au moins un membre choisi parmi l'isoprène et le 1,3-butadiène ;
(C) de 30 à 110 phr d'une matière de charge pour le renforcement, sous la forme de :
(1) de 30 à 110 phr d'agrégats de silice précipitée amorphe synthétique ; ou
(2) de 10 à 105 phr d'agrégats de silice précipitée amorphe synthétique et de 5 à 100 phr de noir de carbone pour le renforcement du caoutchouc ; et
(D) un agent de couplage pour la silice sous la forme d'un alcoxyorganomercaptosilane bloqué, dans lequel
(1) ledit alcoxyorganomercaptosilane bloqué répond à la formule générale (I) :
(X₃Si)ₙ-G-S-C(=O)-Y (I)
dans laquelle Y est choisi de manière indépendante parmi un atome d'hydrogène et des radicaux alkyle à chaîne droite, cycliques ou à chaîne ramifiée contenant de 1 à 18 atomes de carbone et qui peuvent ou non contenir une insaturation, des groupes alcényle, des groupes aryle et des groupes aralkyle ;
dans laquelle G est choisi de manière indépendante parmi des groupes divalents qui dérivent de la substitution de groupes alkyle, de groupes alcényle, de groupes aryle ou de groupes aralkyle, G pouvant contenir de 1 à 18 atomes de carbone, avec cette condition toutefois que G n'est pas tel que ledit mercaptoalcoxysilane contient un groupe carbonyle à insaturation alpha ou bêta y compris une liaison double carbone-carbone à côté du groupe thiocarbonyle ;
dans laquelle X est choisi de manière indépendante parmi le groupe constitué par un groupe -Cl, un groupe -GR, un groupe RO-, un groupe RC(=O)-, un groupe R₂C=NO-, un groupe R₂NO- ou un groupe R₂N-, un groupe -R, un groupe -(OSiR₂), un groupe (OSiR₃), où R est choisi parmi un atome d'hydrogène, des radicaux alkyle saturés à chaîne droite, cycliques ou à chaîne ramifiée contenant de 1 à 18 atomes de carbone, des radicaux alkyle insaturés à chaîne droite, cycliques ou à chaîne ramifiée contenant de 2 à 18 atomes de carbone, et parmi des groupes alcényle, des groupes aryle et des groupes aralkyle ; et dans laquelle G est tel qu'indiqué ci-dessus et dans laquelle au moins un X ne représente pas un radical -R ; ou
(2) dans laquelle ledit alcoxyorganomercaptosilane est choisi parmi le thioacétate de 2-triéthoxysilyl-1-éthyle ; le thioacétate de 2-triméthoxysilyl-1-éthyle ; le thioacétate de 2-(méthyldiméthoxysilyl)-1-éthyle ; le thioacétate de 3-triméthoxysilyl-1-propyle ; le thioacétate de triéthoxysilylméthyle ; le thioacétate de triméthoxysilylméthyle ; le thioacétate de triisopropoxysilylméthyle ; le thioacétate de méthyldiéthoxysilylméthyle ; le thioacétate de méthyldiméthoxysilylméthyle; le thioacétate de méthyldiisopropoxysilylméthyle ; le thioacétate de diméthyléthoxysilylméthyle; le thioacétate de diméthylméthoxysilylméthyle ; le thioacétate de diméthylisopropoxysilylméthyle ; le thioacétate de 2-triisopropoxysilyl-1-éthyle ; le thioacétate de 2-(méthyldiéthoxysilyl)-1-éthyle ; le thioacétate de 2-(méthyldiisopropoxysilyl)-1-éthyle; le thioacétate de 2-(diméthyléthoxysilyl)-1-éthyle ; le thioacétate de 2-(diméthylméthoxysilyl)-1-éthyle ; le 2-(diméthylisopropoxysilyl)-1-éthyle; le thioacétate de 3-triéthoxysilyl-1-propyle; le thioacétate de 3-triisopropoxysilyl-1-propyle ; le thioacétate de 3-méthyldiéthoxysilyl-1-propyle ; le thioccétate de 3-méthyldiméthoxysilyl-1-propyle ; le thioacétate de 3-méthyldiisopropoxysilyl-1-propyle ; le 1-(2-triéthoxysilyl-1-éthyl)-4-thioacétylcyclohexane ; le 1-(2-triéthoxysilyl-1-éthyl)-3-thioacétylcyclohexane ; le 2-triéthoxysilyl-5-thioccétylnorbornène ; le 2-triéthoxysilyl-4-thioccétylnorbornène ; le 2-(2-triéthoxysilyl-1-éthyl)-5-thioccétylnorbornène ; le 2-(2-triéthoxysilyl-1-éthyl)-4-thioacétylnorbornène ; l'acide 1-(1-oxo-2-thia-5-triéthoxysilylphényl)benzoïque ; le thioacétate de 6-triéthoxysilyl-1-hexyle ; le thioacétate de 1-triéthoxysilyl-5-hexyle; le thioacétate de 8-triéthoxysilyl-1-octyle ; le thioacétate de 1-triéthoxysilyl-7-octyle ; le thioacétate de 6-triéthoxysilyl-1-hexyle ; le thioacétate de 1-triéthoxysilyl-5-octyle; le thioacétate de 8-triméthoxysilyl-1-octyle; le thioacétate de 1-triméthoxysilyl-7-octyle ; le thioacétate de 10-triéthoxysilyl-1-décyle; le thioacétate de 1-triéthoxysilyl-9-décyle; le thioacétate de 1-triéthoxysilyl-2-butyle ; le thioacétate de 1-triéthoxysilyl-3-butyle; le thioacétate de 1-triéthoxysilyl-3-méthyl-2-butyle ; le thioccétate de 1-triéthoxysilyl-3-méthyl-3-butyle ; le thioacétate de 3-triméthoxysilyl-1-propyle ; le thiopalmitate de 3-triéthoxysilyl-1-propyle; le thiooctoate de 3-triéthoxysilyl-1-propyle; le thiobenzoate de 3-triéthoxysilyl-1-propyle ; le thio-2-éthylhexanocte de 3-triéthoxysilyl-1-propyle ; le thioacétate de 3-méthyldiacétoxysilyl-1 propyle ; le thioacétate de 3-triacétoxysilyl-1-propyle; le thioacétate de 2-méthyldiacétoxysilyl-1-éthyle ; le thioacétate de 2-triacétoxysilyl-1-éthyle; le thioacétate de 1-méthyldiacétoxysilyl-1-éthyle ; le thioacétate de 1-triacétoxysilyl-1 éthyle ; le thioacétate de 3-éthoxydidodécyloxy-1-propyle ; le thioacétate de 3-éthoxyditétradécyloxy-1-propyle ; le 3-éthoxydidodécyloxy-1-propylthiooctoate et le 3-éthoxyditétradécyloxy-1-propylthiooctoate ; et
dans laquelle
(i) ledit élastomère fonctionnalisé à base diénique est couplé à de l'étain ; et/ou
(ii) ladite bande de roulement circonférentielle se présente sous la forme d'au moins une première zone longitudinale circonférentielle de la bande de roulement circonférentielle dudit bandage pneumatique en combinaison et en relation parallèle avec au moins une zone longitudinale circonférentielle supplémentaire de bande de roulement, ladite au moins une zone longitudinale circonférentielle supplémentaire de bande de roulement possédant une composition de caoutchouc comprenant au moins un élastomère non fonctionnalisé choisi parmi des polymères d'isoprène et du 1,3-butadiène et des copolymères de styrène et d'au moins un membre choisi parmi l'isoprène et le 1,3-butadiène et des polymères et des copolymères d'isoprène et du 1,3-butadiène couplés à l'étain et des copolymères de styrène et d'au moins un membre choisi parmi l'isoprène et le 1,3-butadiène couplés à l'étain, étant par ailleurs exclu que lesdits élastomères fonctionnalisés soient contenus dans ladite première zone de bande de roulement longitudinale circonférentielle.

2. Bandage pneumatique selon la revendication 1, dans lequel, pour ledit élastomère fonctionnalisé à base de diène conjugué, lesdits groupes fonctionnels sont disposés de manière aléatoire sous la forme de groupes individuels le long de la chaîne élastomère.

3. Bandage pneumatique selon l'une quelconque des revendications précédentes, dans lequel l'élastomère fonctionnalisé à base diénique est fonctionnalisé avec au moins un groupe amine répondant à la formule générale (II) : 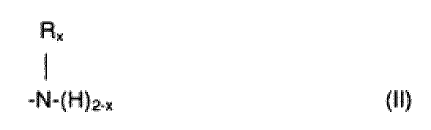 dans laquelle x prend une valeur de 0 à 2 et R est choisi parmi des radicaux alkyle saturés à chaîne droite et des radicaux alkyle saturés à chaîne ramifiée qui contiennent de 1 à 20 atomes de carbone et des radicaux aryle et des radicaux aryle substitués qui contiennent de 6 à 30 atomes de carbone.

4. Bandage pneumatique selon l'une quelconque des revendications précédentes 1 ou 2, dans lequel ledit élastomère fonctionnalisé à base diénique est fonctionnalisé avec au moins un groupe d'amine hétérocyclique choisi parmi des groupes à base de pyridine, de pyrrolidine, de pipéridine, d'hexaméthylène-imine et d'indole ; avec au moins un groupe benzénique substitué choisi parmi des groupes de chlorobenzène, de bromobenzène, d'alcool benzylique et de nitrobenzène ; ou avec au moins un groupe fonctionnel d'organosilane choisi parmi des groupes contenant un groupe alkylsilane, un groupe alkylhalogénosilane, un groupe alcoxysilane, un groupe alcoxyhalogénosilane, un groupe silanol et un groupe alkylaminosilane.

5. Bandage pneumatique selon l'une quelconque des revendications précédentes 1 ou 2, dans lequel ledit élastomère fonctionnalisé à base diénique est fonctionnalisé avec au moins un groupe contenant un groupe silanol, au moins un groupe contenant un groupe alcoxysilane, au moins un groupe contenant un groupe époxy, de préférence un groupe contenant un groupe glycidoxy ou un groupe contenant un groupe diglycidylamino, ou un groupe contenant un groupe cétone, un groupe alcool, un groupe aldéhyde ou un groupe ester.

6. Bandage pneumatique selon la revendication 1, dans lequel le groupe fonctionnel de la deuxième catégorie est un groupe alcool qui dérive de la 4,4'-bis(diméthylamino)-benzophénone, de la 4,4'-bis(éthylamino)-benzophénone, de la 4,4'-bis(dibutylamino)-benzophénone, de la 4,4'-diaminobenzophénone ou de la 4,4'-diméthylaminobenzophénone.

7. Procédé de préparation d'un bandage pneumatique selon au moins une des revendications précédentes, le procédé comprenant le fait de :
(A) mélanger, dans au moins une étape de mélange préparatoire séquentiel, dans un mélangeur de caoutchouc interne, des ingrédients comprenant au moins un desdits élastomères fonctionnalisés, englobant de manière facultative au moins un desdits élastomères supplémentaires à base diénique, et ladite matière de charge pour le renforcement jusqu'à une température qui se situe dans la plage de 140 °C à 175 °C en l'absence d'une addition de soufre libre ;
(B) ensuite, ajouter par mélange, dans la même étape de mélange séquentiel dans un mélangeur de caoutchouc interne, ledit alcoxyorganomercaptosilane bloqué en l'absence d'une addition de soufre libre jusqu'à une température qui se situe dans la plage de 140 °C à 175°C;
(C) ensuite, ajouter par mélange, dans une étape de mélange ultérieure, des ingrédients comprenant d'adjuvant de vulcanisation comprenant de soufre libre d'au moins un accélérateur organique pour la vulcanisation au soufre jusqu'à une température qui se situe dans la plage de 95 °C à 120 °C ;
(D) configurer le mélange résultant de l'étape (C) pour obtenir une bande de roulement de bandage pneumatique configurés en caoutchouc non vulcanisé et confectionner un bandage pneumatique qui contient ladite bande de roulement à l'état non vulcanisé pour obtenir un assemblage de bandage pneumatique, avant de soumettre à une vulcanisation au soufre ledit assemblage de bandage pneumatique dans un moule approprié à une température élevée dans la plage de 140 °C à 180 °C pour obtenir le bandage pneumatique.
